# EUROPEAN PATENT APPLICATION

(11) **EP 1 241 643 A2**
(43) Date of publication of application: **18.09.2002**
(21) Application number: 02005518.2
(22) Date of filing: 11.03.2002
(51) Int. Cl.: G07F 19/00, G06F 17/60

(54) **Method and system for providing web content aggregation and/or web payment**

(30) Priority: 12.03.2001 EP 01106070
(71) Applicant: Deutsche Bank AG, 60325 Frankfurt (DE); Accenture GmbH, 65843 Sulzbach/Taunus (DE)
(72) Inventor: Hoss, Hans, 65812 Bad Soden (DE); Pinkl, Jürgen, 88483 Burgrieden (DE); Wicht, Wolfgang Dr., 65812 Bad Soden (DE)
(74) Representative: KEIL & SCHAAFHAUSEN

(57) **Abstract**

In a method for providing web content aggregation or web payment by communicating information between a user, an aggregator and a financial services provider (source) storing specific user data on a source server, a control software for controlling the authorization and data retrieval/ sending process is executed on a client device. The client device connects to the central server device to retrieve driver files for the specific source server and business transaction. The user enters confidential access data requested from the control software locally executed and optionally stored on the client device. The client device connects to the source server to perform the authorization process, wherein after authorization is successfully completed the client device automatically extracts the required information out of the source information and forwards this data to the aggregator or initiates the payment process by a data exchange with the source. The aggregator enhances the data and returns the enhanced data to the client device. All relevant information is provided via a communications network like the internet.

## Description

The invention relates to a method and a system for providing web content aggregation and/ or web payment.

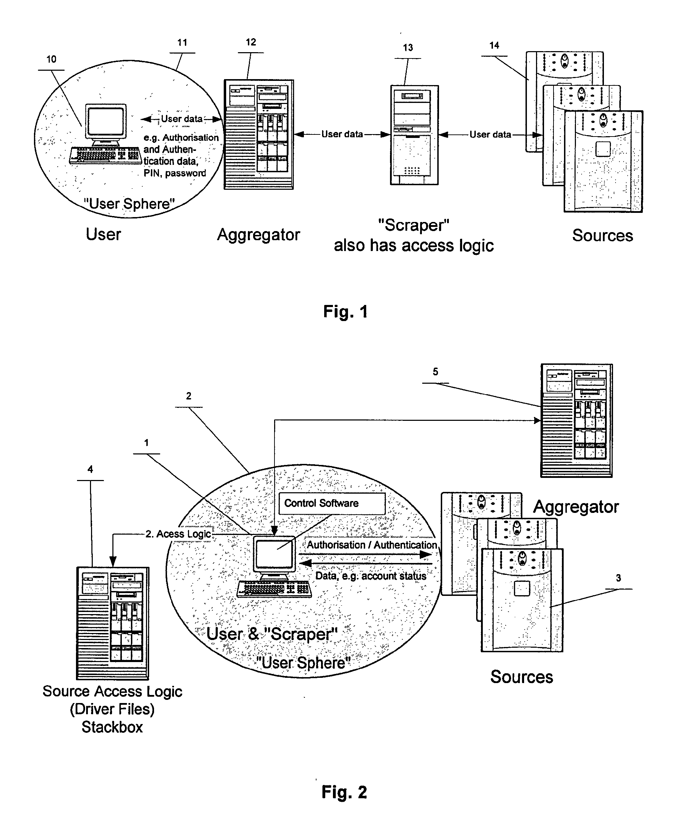

Web content aggregation is the collection of account information from one or more financial sites. Web payment is the immediate and generally irreversible transfer of money from a user (e.g. customer) account in return for goods or services (e.g. from a retailer). In both cases the users are required to enter sufficient information to complete the transaction interaction with their financial institutes (e.g. banks). Some of this information is general (e.g. bank name, account number) but some is highly confidential (e.g. passwords, personal identification number PIN). According to the prior art, current solution providers take this user information and transport it to a third party server (e.g. aggregator and/or scraper) with the necessary technical and software equipment which then interacts with the user's financial site (source), as shown in Fig. 1. This is the process adopted by current products as BTX solutions (FUN, ADI, t-online) or scraping technology solutions (yoodle, yopass, umonitor). However, with this solutions the connection to other internet sites and the highly confidential user data - are transferred via a third party server out of the sphere of the user such that the user looses control of his confidential user data.

The object of the present invention is to implement web content aggregation and/ or web payment without transferring confidential user information to a third party.

The object is solved with the present invention according to the features of the independent claims. For web content aggregation by communicating information between a user and a source storing specific user data on a source server, a method is provided,
- wherein a control software for controlling the authorization and data retrieval/sending process is executed on a client device,
- wherein the client device connects to a central server device to retrieve driver files for the specific source server and business transaction,
- wherein the user enters confidential access data requested from the control software executed on the client device,
- wherein the client device connects to the source server to perform the authorization process,
- wherein after authorization is successfully completed the client device automatically extracts the required data out of the source information,
- wherein the data is enhanced and presented to the user, and
- wherein the information is provided via a communications network like the internet.

The central server device is a business-to-business internet platform (called Stackbox) providing an infrastructure containing software and operational services (especially driver files) for web content aggregation and/ or web payment. With this driver files transferred from the central server device to the client device, processes are provided that enable the interaction to other financial sites (source server, e.g. web site of a bank) directly from the user's local end device (client device, e.g. PC). Therefore, confidential user data and the interaction with the user's financial site remain within the sphere of the user. Accordingly, the present invention is conforming to European security standards, e.g. ZKA, BdB, and privacy is secured due to the end-to-end approach since confidential data (e.g. username and password) are not forwarded to any third party. Further, by transferring the actual driver files from a central server device to the client device before accessing the source server, always the latest access information is used to enable a well functioning access.

Web content aggregation services are often offered by financial institutions as well as other web intermediaries (portals), called aggregator in the following. In this case, the client device forwards the data extracted out of the source information to an aggregator. Then, the aggregator enhances the data and the enhanced data is transmitted to the user's client device. According to the Stackbox technology for data collection, web content aggregation services are offered by the aggregators to their clients, wherein the authorization and authentication is exclusively executed on the client device. All required data are still obtained by a direct connection between the client device (e.g. PC) and the source (e.g. bank). Only the extracted data are then forwarded to the aggregator who enhances the data. No technical or contractual relationships are required between the source and the aggregator. With this method, for the aggregator it is possible to offer value added services to its end-users based on aggregated financial data of customers across financial institutions providing site-independent personalization for the end-user and based on customer preferences on web content. The technology is generally applicable in all countries and for any web sources respectively content. This method offers the ability to increase number, frequency and duration of site visits as well as advertising impressions and revenue. Rich customer profiles are generated to enhance e-commerce and direct marketing initiatives. A benefit for the end-user is - besides the high security of the web content aggregation since confidential data is not forwarded to any third party - the possibility of a comprehensive site-independent web content personalization and an access to online shopping without using a credit card or cash on delivery fee.

Further, a method for providing web payment by communicating information between a user, an aggregator (e.g. online book store) and a financial services provider (source, e.g. bank) storing specific user data on a source server is provided by the current invention,
- wherein a control software for controlling the authorization and data retrieval/sending process is executed on the client device,
- wherein the client device connects to the central server device to retrieve driver files for the specific source server and business transaction,
- wherein the user enters confidential access data requested from the control software locally executed on the client device,
- wherein the client device connects to the source server to perform the authorization process,
- wherein after authorization is successfully completed the client device automatically initiates the payment process by a data exchange with the source, extracts the resulting data out of the source information and forwards this data to the aggregator,
- wherein the aggregator enhances the data, and
- wherein the information is provided via a communications network like the internet.

This method for web payment uses the same Stackbox solution according to which the confidential user data remains in the sphere of the user and is not transferred to a third party server. The logic to access the source site (web site to initiate money transfers) is stored on a central server and retrieved directly by the user's client device. Thus, the retailers can offer a secure, instant and generally irreversible web payment to their clients. Further, the payment transaction costs and risks for retailers are reduced by the web payment using a real time, non-reversible, low cost money transfer and no credit card or other online payment method (e.g. eCash, CyberCash, SET). This is especially interesting for retailers who sell goods which are usually paid in advance (e.g. travel, tickets, electronics). In addition, prepayment reduces working capital need at retailer versus delivery against invoice.

By retrieving the control software from an aggregator server device preferably before each access from the client device to the source it can be guaranteed that always the up-to-date software version is used.

According to the invention, the driver files correlate the input fields of the source (e.g. web site of the bank) to data of the control software. This correlation assures that the control software can input the necessary data (e.g. account number, passwords, PIN) directly to the source software. The source software can in this case be a normal web site offered on the internet. The control software itself might be transferred to the client device directly before the interaction or offered from the aggregator to the client as a program stored on a data carrier to be installed on the client device.

In the same manner the output data of the source (e.g. bank) are correlated by the driver files to the standard fields of the control software in order to achieve an easy and reliable data exchange.

According to an embodiment of the invention the driver files lead through the specific source software. Therefore, the driver files are adopted such that they enter the necessary commands of source software in order to obtain the desired data. Normally, this data had to be entered by the user himself. By use of such driver files the access to a source is more comfortable and secure as errors in handling the source software are avoided. During access to the source, the respective sites of the source software might be presented to the user by the control software in order control the access process.

In order to enable the use of common internet technology the data is provided to the source and extracted out of the source information in a HTML or XML format. Of course, any other standard data format could be used.

According to the present invention the data extracted from the source information is sent to the aggregator in the form of machine readable raw data. The raw data can be directly imported into the enhanced data presentation of the aggregator without data format conversion that might create errors in the data set.

For convenience of the user, the confidential access data can optionally be stored locally on the user's client device. It is preferred that this configuration and access information is stored in an encrypted format. However, according to the Stackbox technology these data are not transferred to the Stackbox server, the aggregator or any other third party.

It is further provided according to the present invention that the control software serially and/ or parallelly accesses a plurality of sources according to the configuration retrieved from the aggregator server device. Thus, it is possible for the user to access multiple sources with one click.

The control software is preferably an applet that uses known internet technology and can be executed by standard browsers on the client device.

Further, the present invention relates to a computer program product comprising program code means for performing the above described method, if the program is used on a computer or computer network, and to a computer program product comprising program code means, stored on a computer readable data carrier.

The present invention is further related to a system for providing web content aggregation and/ or web payment by communicating information between a user, an aggregator and a source, comprising at least one source server storing specific user data, at least one aggregator server device storing software for controlling authorization and data retrieval/ sending processes, a central server storing driver files for specific source servers and/ or business transactions, a client device connected to the aggregator server device to retrieve, store and execute the control software for controlling the authorization and data retrieval/sending process in a local memory and connected to said central server to retrieve the driver files for the specific source servers and/ or business transactions, wherein the client device is connected to the source server to automatically exchange the required data with the source server and forward this data to the aggregator, wherein said aggregator server device is connected to said client device for transmitting enhanced user data to the user's client device, wherein the client device, the central server and the aggregator computer are linked via a communications network like the internet.

The system according to present invention uses for web business the Stackbox technology according to which the necessary software and operational services for access to different sources are preferably provided as driver files on a central server device (Stackbox). Whenever a client device is going to access a certain source it loads the driver files for the respective source from the Stackbox and then accesses all desired sources using the loaded driver files. Thus, all confidential information remains on the client device within the sphere of the user.

Preferably, the source server is provided with a HTML or XML based interface and the client device communicates with the aggregator server device, the central server device and/or the source server via a HTTP and/or HTTPS connection.

The invention will now be described by way of examples and with reference to the accompanying drawings. Thereby, further features and advantages are presented that are part of the present invention independently of the appended claims.
- Fig. 1: is a block diagram of a prior art method;
- Fig. 2: is a block diagram of the method according to the present invention;
- Fig. 3: is a detailed diagram of the method for providing web content aggregation according to the present invention;
- Fig. 4: is a detailed diagram of the method for providing web payment according to the present invention;
- Fig. 5: shows the initial page for web content aggregation;
- Fig. 6: shows the page with an account configuration overview for web content aggregation;
- Fig. 7a to 7e: show several steps of the source processing for web content aggregation;
- Fig. 8: shows a page with raw data to be transferred to an aggregator for web content aggregation;
- Fig. 9: shows a page with the enhanced data presented by aggregator to the end-user for web content aggregation;
- Fig. 10a to 10d: show several steps of account configuration;
- Fig. 11: shows the initial page for web payments;
- Fig. 12: shows the start page of the control software (applet) for web payments;
- Fig. 13: shows the completed money transfer form for web payments;
- Fig. 14: shows the start page of the source process for web payments;
- Fig. 15: shows the confirmation page of the aggregator/ retailer for web payments; and
- Fig. 16: shows the application architecture of the system according to the present invention.

The scopes for web content aggregation and web payment are to provide an account overview (value, currency, date) for cash accounts ("Verrechnungskonten" and "Girokonten") in EUR or DEM, a list of transactions for these cash accounts ("Umsatze", Amount, book date, value date, currency...) and security holding information (WKN, name, number, value) as well as the possibility for money transfer via the internet.

In contrast to the method according to the prior art shown in Fig. 1, wherein the user data (i.e. Authorisation and Authentication data, PIN, TAN, passwords) are transferred from the client device 10 out of the user sphere 11 to the aggregator 12 and afterwards to a scraper 13 having the technology and access logic to access the required sources 14, with the method according to the invention shown in Fig. 2 all the confidential user data remain on the client device 1. Thus, during the whole process the data remain within the user sphere 2 and cannot be read or manipulated by any third party. This high security standard can be achieved, because the client device 1 directly accesses the sources 3 and the confidential user data do not need to be transferred to any third party that then accesses a source 14 using the user data. The source 3 is a site, e.g. of a bank, which is accessible and/ or readable using the control software (Stackbox client or applet).

The direct access of the client device 1 to the (different) sources 3 is possible using a control software that is exclusively running on the client device. However, this control software cannot contain all the access and transaction information for all possible sources 3. Therefore, it is provided a central server device 4 called Stackbox containing all necessary source access logic. This Stackbox 4 can be connected to the client device 1 via a network like the internet to transfer the necessary access logic to client device 1 in the form of driver files. These driver files are hosted on the Stackbox server 4 defining the source specific business and access logic and used by the control software of the client device 1 for the access. The control software (Stackbox client or applet) itself runs on the client device 1 of the user and controls the authorization, authentification and data retrieval/ sending process, specifically the local storage and retrieval of data, and the access, analysis and processing of source information.

Further, an aggregator 5 can be connected to the client device 1 via a public or private network. The aggregator 5 uses the Stackbox technology to offer aggregation services to its users. He publishes the control software (Stackbox client or applet) on its own web site and calls it in its own pages transferring the software to the client device 1 and passing parameters to it (e.g. bank code, account number, amount, currency). The control software then connects to the Stackbox server to retrieve the up-to-date driver files for the specific source server and business transaction. Any confidential access data (e.g. password, user name, PIN, TAN) is requested by the control software directly from the user. This data can optionally be stored locally in encrypted format for convenience of the user. Additional local settings (e.g. proxy configuration) can also be stored locally on the user's client device 1. The control program extracts the required data out of the source information (e.g. HTML pages) and forwards this information to the aggregator 5. The aggregator 5 stores and enhances the data. Finally, the enhanced data are transferred to the client device 1 for presentation to the user. Instead of transferring the data to the aggregator 5 for enhancement and retransferring of the enhanced data to the user device 1, it is possible, that the control software of the aggregator performs the enhancement directly on the client device 1.

There are two service areas: web content aggregation and web payments. Within the web content aggregation product area the Stackbox 4 (central server device) will focus on current and securities accounts. To ensure a reasonable coverage of the financial services market in this segment rapid extension of the driver file repository for the sources 3 will be the first priority.

The control software (stackbox client) running on the end-user machine is delivered as a signed applet including maintenance comprising installation support (reference book how to integrate the control software into other systems including an interface description; sample implementation; access to the source code of the pilot/provider demo system; telephone installation support). Further, on the stackbox 4 itself hosting of the driver files is provided for the access by the end-user with comprehensive repository of driver files (including maintenance).

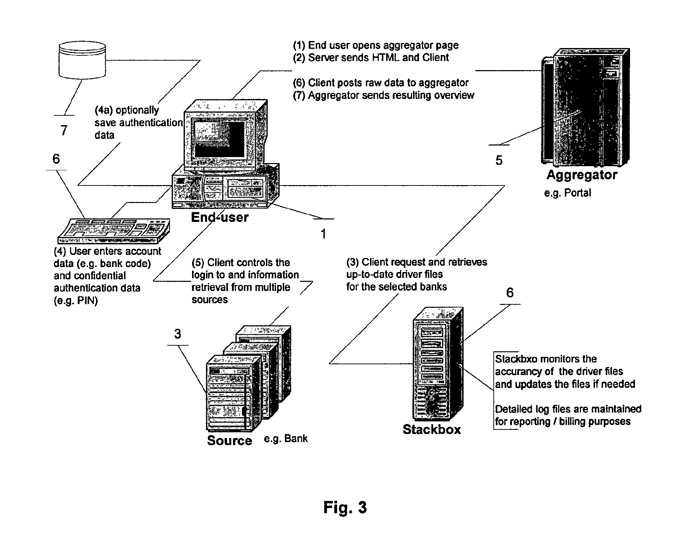

In the following, the process of web content aggregation is described in detail with reference to Fig. 3 showing the business process of web content aggregation based on a client device 1 being a PC and the source information in HTML format. In this figure, the control software is called "Client". In the described case it is assumed, that the user is a returning user who has configured his settings already in an earlier session and who has a cash account and a securities account with Bank A (e.g. Deutsche Bank 24) and an account with Bank B (e.g. Sparkasse Köln).

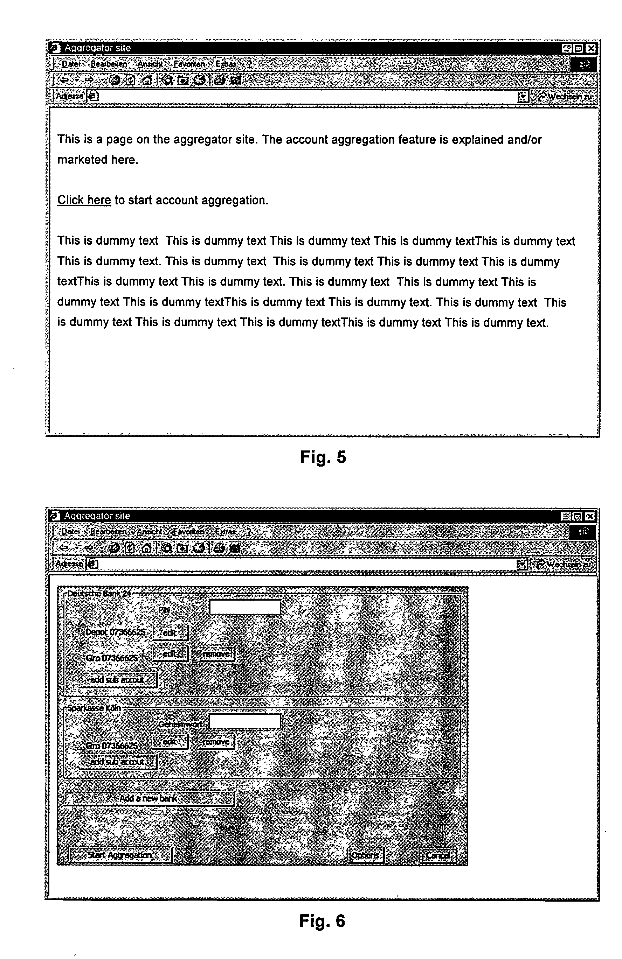

In a first step, the end user opens a starting page of the aggregator 5. Following, on the aggregators site the user selects the link "Click here to start account aggregation" (see Fig. 5). This link opens a new page on the aggregators site. The new page contains the Stackbox applet (control software). In the following step, the applet being e.g. a java based software is downloaded from the internet server of the aggregator 5 to the local client device 1 and then executed locally on the end-user's client device 1 being a PC. Further, the HTML calls the applet passing parameters to the applet (e.g color scheme, fonts) and the control software (client) requests and retrieves in the third process step the up-to-date driver files from the Stackbox 4 being a central server device accessable via a network like the Internet. The Stackbox 4 always monitors the accuracy of the driver files and updates the files if needed. Further, detailed log files are maintained for reporting/ billing purposes. The connection with the Stackbox 4 is not visible on the client device 1 for the end-user.

Then the control software presents a new page to the end-user (see Fig. 6) with an overview of the account information. The user enters the PIN for DB24 and the Geheimwort for Sparkasse Köln using his user input device 6 and selects the button "Start aggregation" in the fourth step. For convenience of the user, the user data (PIN, Geheimwort) might be stored in encrypted format on a local storage device 7.

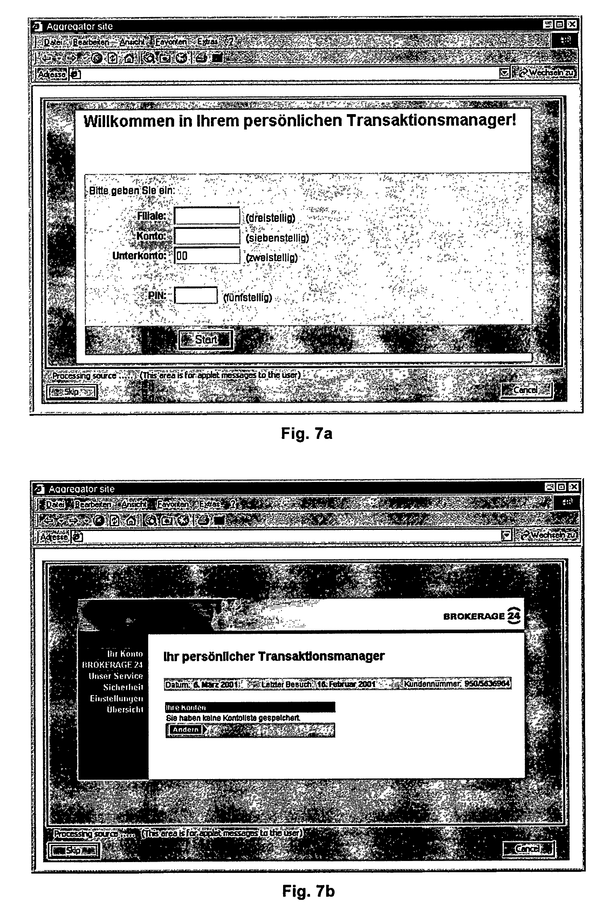

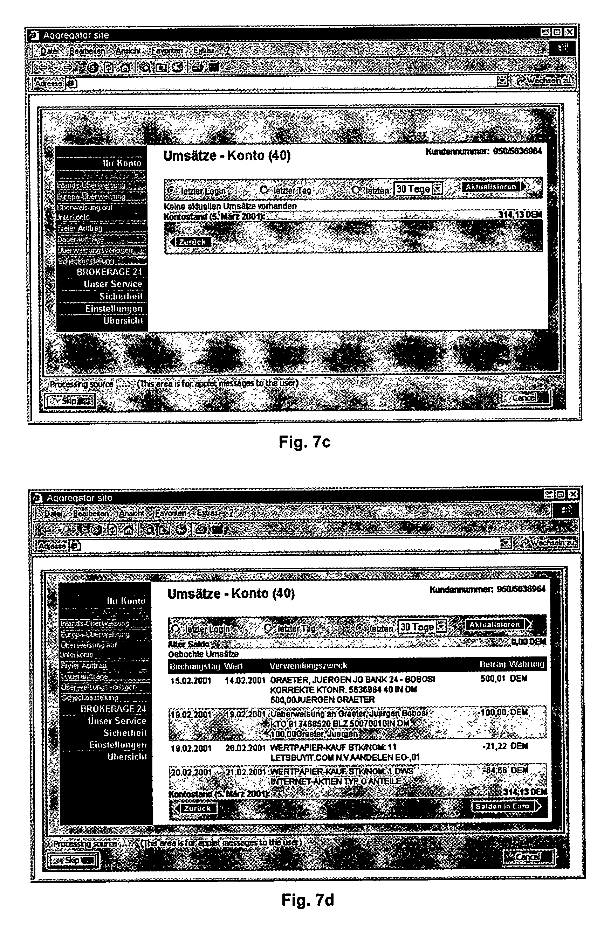

After the start of the aggregation process, the actual processing of the source starts. The control software reads in the fifth step the HTML pages from multiple sources. Therefore, the applet of the control software itself contains the generic business logic for "log in". The driver file automatically performs the mapping of the generic logic to the source specific implementation. The applet has the information AccountNumber, SubAccountNumber, Password1 and a generic Field1. The driver file describes how to use this information. In the example (see Fig. 7a) this is:
- Use the internal field Field1 and enter it in the field labeled Filiale.
- Use the internal field AccountNumer and enter it in the field labeled Konto.
- Use the internal field SubAccountNumber and enter it in the field labeled Unterkonto.
- Use the internal field Password1 and enter it in the field labeled PIN.
- Click the button labeled "start".

The button click retrieves the next page from the source (see Fig. 7b). For the source the control software applet behaves exactly like a normal user using a standard browser. Therefore, the driver file initiates a couple of clicks of the applet to navigate to the account overview (see Fig. 7c). Now, the radio button "letzten" is selected by the driver file, the correct value in the drop down list is chosen and the button "Aktualisieren" is clicked. Then, the actual transaction list for the required account is presented (see Fig. 7d). The internal representation for this information is BookDate, ValueDate, Text, Amount, Curreny. The driver file maps the source specific implementation to the internal representation. In this example:
- The column labeled "Buchungstag" is stored in BookDate
- The column labeled "Wert" is stored in ValueDate and so on.

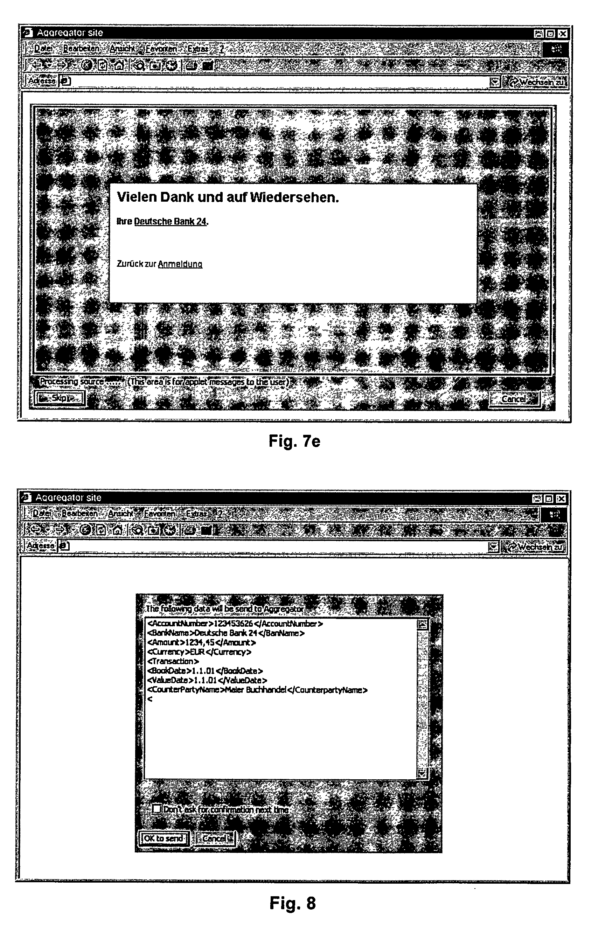

Finally, the control software ends the session with this source 3 (in this case DB24) as shown in Fig. 7e. During the source processing all the source pages (Fig. 7a to 7e) are presented to the user on the client device 1 without giving any possibility for user interaction.

Now the processing of the next sources 3 would start following the exact same schema.

After the control software has retrieved all information from the sources 3 it sends the information in the sixth step as machine readable raw data (in XML format) to the aggregator 5 (see Fig. 8). The information sent contains information that is owned by the end-user and does not contain confidential access data (i.e. not the PIN, passwords etc.).

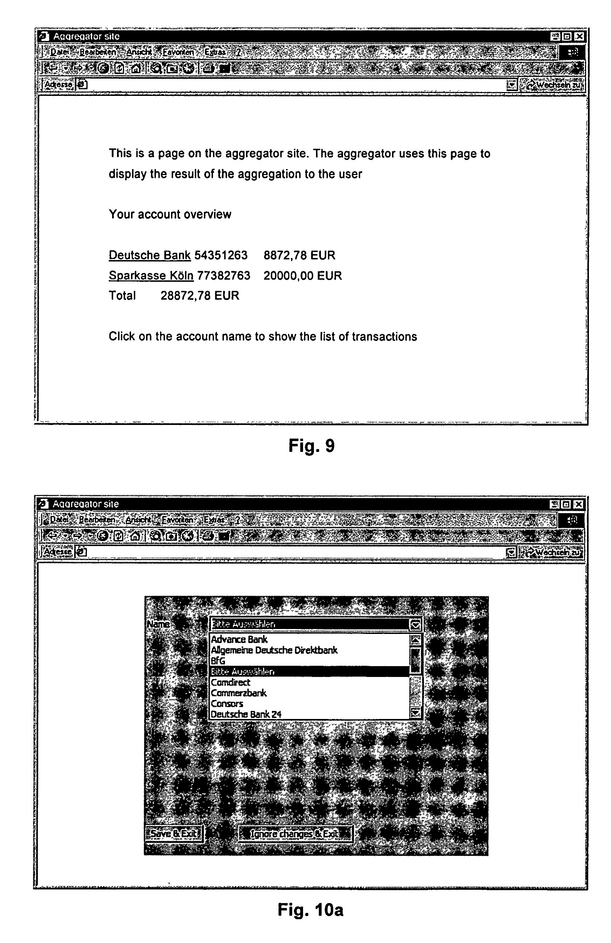

The aggregator 5 enhances the raw data and resends it as enhanced HTML as a resulting overview to the client device 1 of the user where it is displayed on the screen and/ or stored in a storage device (see Fig. 9).

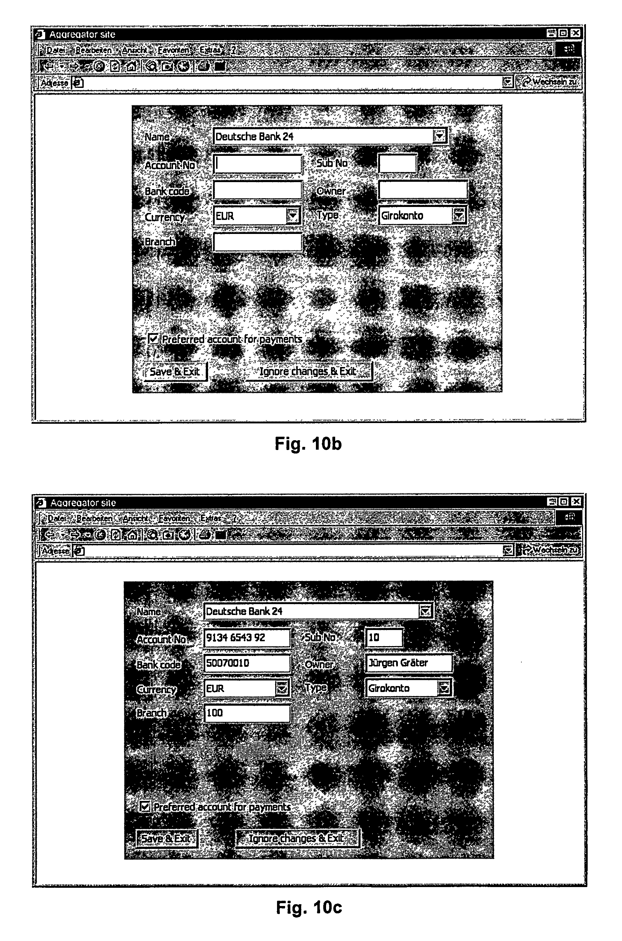

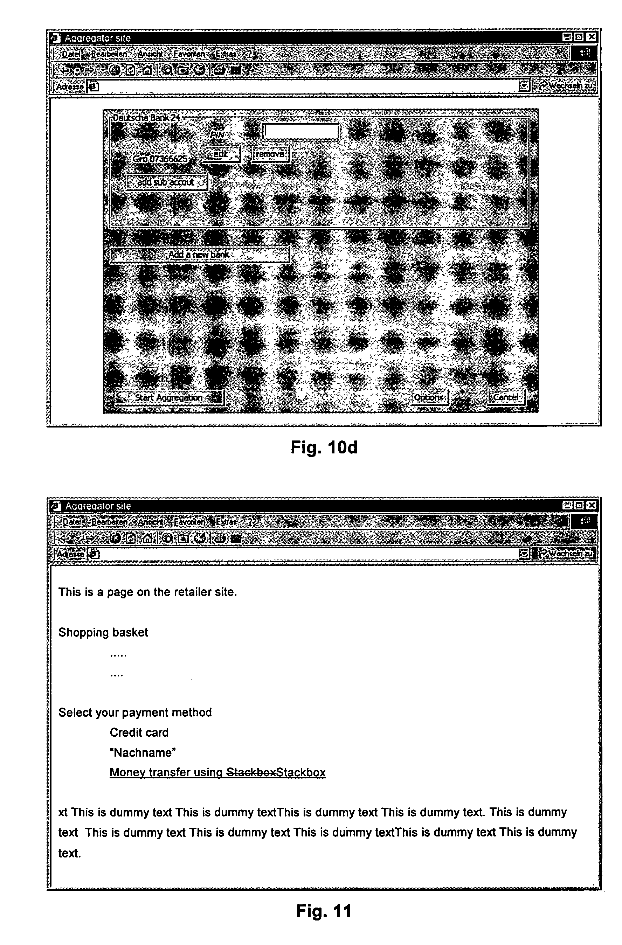

In case the account configuration has not yet been performed by the end-user, he is asked to do so at the beginning of the web content aggregation process. The different steps are shown in Figs. 10a to 10d.

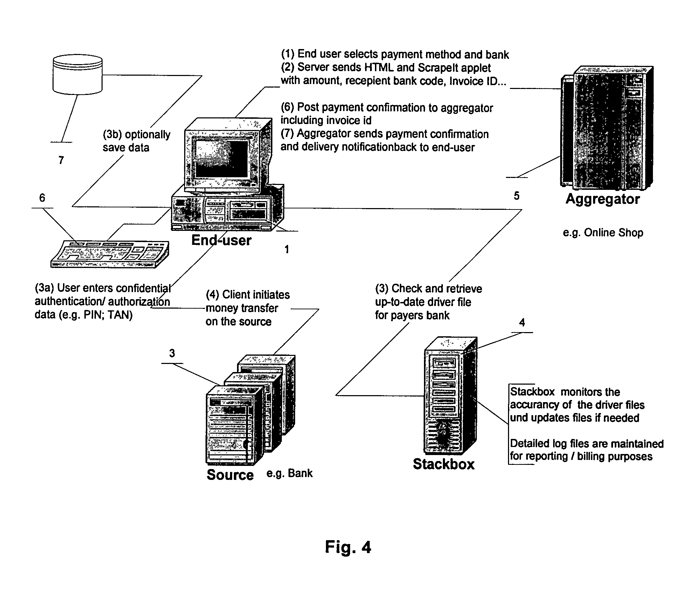

In the following the process of web payment is described in detail with reference to Fig. 4 showing the business process of web payments based on a client device 1 being a PC and the source information being in HTML format. It is assumed as well, that the user is a returning user who has configured his settings already in an earlier session and wants to buy a book with an online book retailer. The retailer is here the aggregator 5.

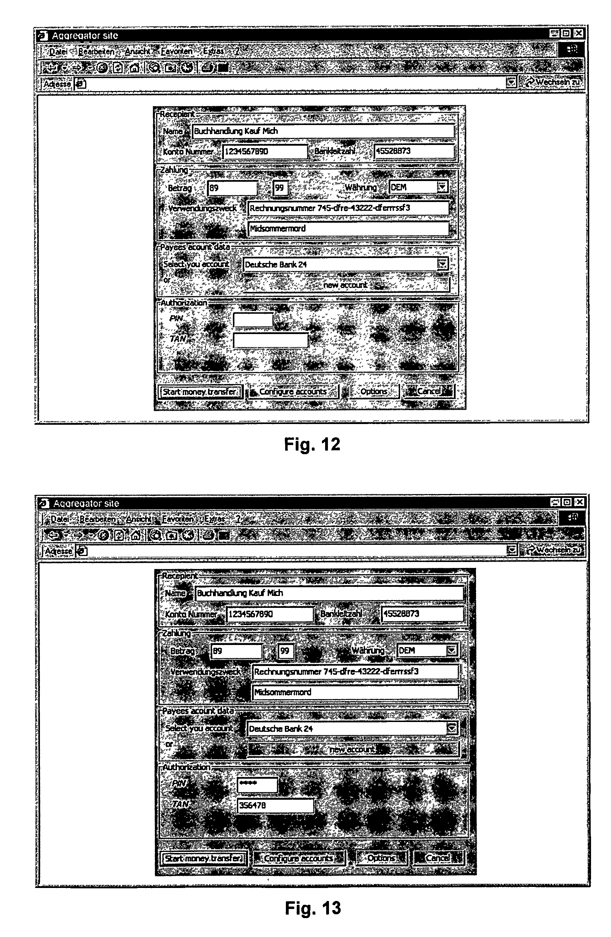

On the retailer's/ aggregator's site the user clicks in the first step the link labeled "pay using Stackbox" or labeled "money transfer from bank xyz" (see Fig. 11). This link opens a new page on the retailers site. The new page contains the control program (Stackbox applet) which is transferred in the second step to the client device 1. The HTML calls the applet passing parameters to the applet (e.g color schema, fonts). This process is very similar to web content aggregation so far. However, for payment additional parameters are passed to the applet to specify the actual payment in detail (e.g. recipient name, recipient account number, amount, invoice number) as shown in Fig. 12. In this example, the user configured his Deutsche Bank 24 account as preferred account for web payments. Therefore, the correct account is automatically pre-selected. The label PIN and TAN are source dependent. For another bank the fields might be called "Geheimzahl" and "Superzahl". The user would not be able to modify the fields that are predefined by the retailer (e.g. amount, currency).

In the third step, the user enters confidential data as personal account number, PIN, TAN using his user input device 6. For convenience of the user, this data might be stored in encrypted format on a local storage device 7. Further, the control software (client) checks and retrieves the up-to date driver files from the Stackbox 4 being a central server device accessible via a network like the Internet. The connection with the Stackbox 4 is not visible on the client device 1 for the end-user .

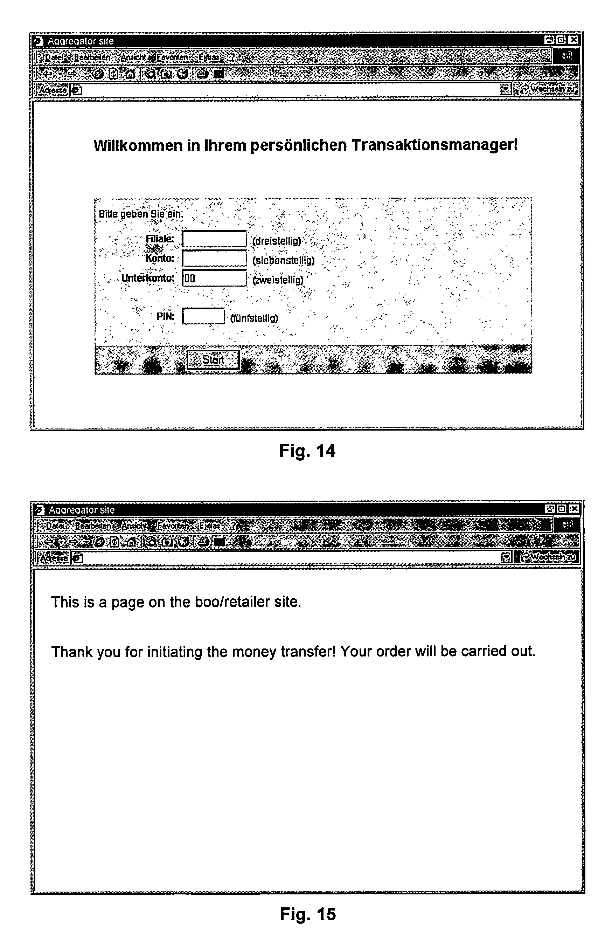

In the fourth step, the control software fills in the generic data above into the bank specific implementation, fills in the TAN and selects "Start money transfer" (Fig. 13). Then it logs in to the source 3 (Deutsche Bank 24) (see Fig. 14).

It navigates to the money transfer form of the source 3, fills in the required data, and transfers the data to the source 3. The driver file then will analyze the response from the bank and check if the money transfer was successfully accepted. (This is done by looking for a search pattern e.g. "Ihre Überweisung wurde entgegengenommen"). The result of the analyses will then be posted to the aggregator (fifth step).

The aggregator then will display a message like "thank you for transferring money, your order will be carried out" in the sixth step (see Fig. 15).

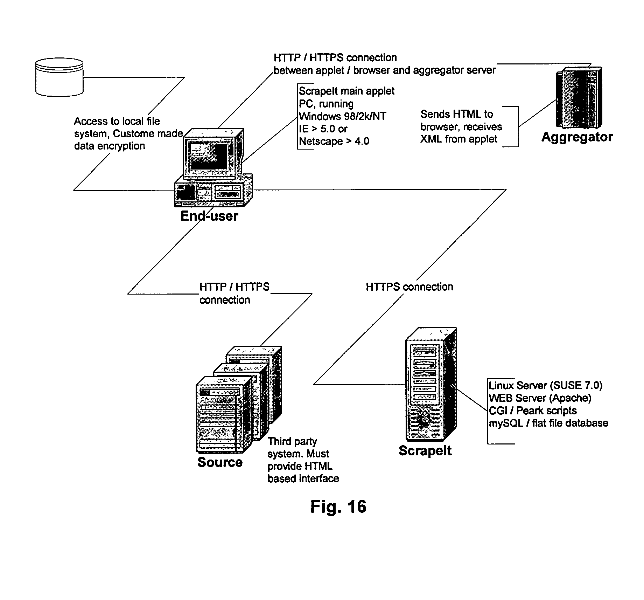

In the following, a detailed functional description is given for the web content aggregation and the web payment processes. The application architecture of the system according to the present invention can be seen in Fig. 16. The requirement for the end-user is a client device 1 being a stand-alone or network PC or the like having access to a communication network like the internet. The aggregator 5 and the Stackbox 4 must have normal server functions capable of HTTP and/or HTTPS connections. Several operating systems and architecture components (Linux, WEB Server and the like) can be used. The source system 3 provides an HTML or XML based interface.

According to the processing model, the end-user requests a page that contains the applet (control program) and parameters in the HTML determining the "behavior" of the applet. The applet further retrieves the driver file. (This is required only to check the availability of the file. It is actually used at a later stage). Then the applet retrieves all required information from the end-user either via the locally stored configuration or via input prompt. Using the driver file the applet operates the source and finally posts the resulting data to the aggregator and opens the next HTML page. This is a non iterative process. The driver file describes the way to process/analyze the source. It does not describe any logic required for the interaction of the end-user with the applet nor does it describe any logic for the interaction of the applet with the aggregator.

This has obviously a strong impact on the maximum change possible with driver files modification only. Using money transfer as an example, the source code of the applet contains the "money transfer business logic", i.e. the required data, any validation of data and the like. The calling HTML contains parameters which show/hide fields, prefill fields, enable/disable editing mode for the fields. The driver file only translates the generic money transfer fields into a site specific usage pattern. Accordingly, the driver file is only concerned, if a new source side is added, an existing source side is modified (e.g. new layout of tables) or a new field in the internal money transfer form is added. The further information is handled by the control program (applet). Same applies if the method is expanded to other countries.

### Applet

As described for the processing model, the applet contains the generic business logic and the data model. The applet preferably accesses all pages serially (e.g. when performing an account aggregation, the sources are accessed one after the other and not in parallel). The rendering engine (the mini browser in the applet itself) is always activated and can not be "switched off". The size of the applet should possibly be below 500k to enable short applet loading time.

Currently the authorisation and authentication is executed with the source via HTML pages. Future versions will additionally support the use of other technologies, e.g. chip cards.

The principle for user interaction is to gather all required user input in one screen. Except the required user input there are the following ways for the user to interact with the running applet:

Locally stored data can be used for applets from different aggregators that will share the configuration files. Thereby, configuration data and personal data will be stored locally. Security relevant information is encrypted. But it is possible, that some applets may require aggregator specific configurations. Therefore, a common and a specific section for the locally stored data can be provided.

The applet supports the most common browser systems like Microsoft Internet Explorer, Netscape Navigator and the like. Additionally, new browsers are evaluated. Further, the applet works with the most common operating systems like Windows NT/2000, Windows 98/ME, Windows 95, Linux and/or the like. According to the use of internet technology, the applet is almost independent of the operating system.

Further, the creation of applets in different languages is supported. All user text (text that is displayed to the end user, e.g. tags at input boxes, buttons, error messages) must be configurable. The internal format and the XML data sent to the aggregator is in English for all versions.

The applet runs without any interaction with the aggregator 5 and uses for its execution the Java virtual machine built in the internet browser (e.g Internet Explorer 4.x and 5.x , Netscape 5.x) or the Java plug in. As alternative to the Java program technique of course all means of executing program code on the end-user PC could be used. Currently it seems to be feasible to use (instead of the applet) a Browser plug-in, Active X components, any executable file, Java Script, Microsoft.net components, Macromedia Flash or the like. However, since technology is evolving rapidly, other technologies might be feasible in the near future.

### Stackbox Server Components

Stackbox server 4 (central server) hosts two kinds of files: log files and driver files.

The log files do not contain any confidential/personal information. However, if the log files were copied by unauthorized personal it might cause an image problem. Therefore, the log files are secured using password restricted access to the files. Further, the files are copied from the external to an internal system, the log files are deleted from the external host on a daily basis and any transmission of the log files is executed via a secure HTTPS-connection.

The driver files contain the business logic to analyze source HTML code. The update to the server is secured using password protected access, access restriction to a specified IP range and transmission via an encrypted line. Further, the applets requesting the driver files are signed by the aggregator and the sending of the driver files to the applet is protected by using an encrypted transmission and serving the files only to correctly signed applets.

Since privacy is a major point in the value proposition, no personal information (e.g. end-user ID, account number, bank code) about the end-user is logged. There are two different log entries: the driver file request entry and the error entry.

Currently, the Stackbox server 4 is used to hold and serve driver files. It is possible to migrate all this functionality to the aggregator 5 which receives the raw data and enhances these data. Thus, one server is created combining the Stackbox 4 and the aggregator 5. This combined server would provide a personalized service in the name of the aggregator having the access logic and information of the Stackbox 4.

### Driver Files

The driver files correlate the source software with the control software and the aggregator data. In particular, the input fields (where does the Stackbox type in the data) have to be mapped to the Stackbox data (e.g. Kontonummer → username, PIN → password ), and the output fields have to be mapped to the Stackbox standard fields (e.g. first column of table → WKN, second column of table → quantity).

### PIN/Password Save

Assuming that a hardware based solution (smart card) is not acceptable for the projected number of end-users, confidential personal information can optionally be stored on the local PC of the end-user (client device 1). Only passwords/PIN are considered confidential personal information. Other data, e.g. account numbers, bank name etc will not be encrypted.

Normal files of the file system are not secure and can be copied by persons having physical access to the workstation and persons accessing the PC via a network connection. Therefore, the file needs to be encrypted. Since the intruder does have a physical copy of the file, brute force attacks are possible to decrypt the content. The length of the key affects the security: the longer the key is the better is the security. Currently a key length of 128 bit (approx. 21 character using upper lower case letters, number and special characters) is assumed to be secure or impossible to be cracked using brute force.

The file has to be encrypted with a long key. A short key (i.e. user password) is not sufficient. Therefore, an additional component has to create and administer an individual long key for the end-user. This is only possible for a registered user. Two possible implementations are feasible:
a) The aggregator 5 creates a key and sends the key to the applet. It requires implementation effort for the aggregator 5. The key can not be shared across different aggregators 5.
b) The user registers with Stackbox 4 and the Stackbox 4 creates and administrates the long key. There is no implementation effort for the aggregator 5. The long key could be shared across different aggregators 5.

Security/Encryption of usernames and/ or passwords can be provided together with the functions: PIN save enabled and PIN save disabled. This offers the ability for the user to decide whether he wants to save confidential data locally on his client device 1.

### Implementation of the source specific handling

This part of the process/ application covers the functionality needed to map a generic source independent logic to the source specific implementation.

For example, the generic flow to log in to a bank is the capability to send a user ID and password pair to the server. A bank specific implementation is to enter the account number (Kontonummer) in a field called "Kontonummer" and to enter the PIN in a field called PIN and click on the button "weiter".

The current implementation is based on a Stackbox server component and on the applet. The server hosts source specific driver files. The driver files are serialized java objects. The applet retrieves the driver files from the server and executes them. An alternative is to build the source specific processing directly into the applet and not to use any server component. Another alternative is to use another format / technology to describe the source specific handling. It would also be feasible to describe the actions in XML (or other) format and to interpret the XML to operate the source.

### Processing of Source Pages

Currently, the source is displayed in the end-users hemisphere (i.e. applet). Alternatively, it would be possible to execute the actual processing on a server. The end-user PC would then be used as a gateway/communication channel between the Stackbox server 4 and the source 5. The only execution logic that must be done by the end-users PC is the handling of confidential information (i.e. PIN).

### Migrate to other devices than PC

Currently, the development is focusing on PC as end-user device 1. Alternatives are all devices that are capable of executing some (restricted) software components. Available or future devices are PDA (e.g. Palm), WAP mobile phones, Playstation, xBox , DreamCast, Set-Top Box, WebTV. Since the development of end devices is going very fast, new devices are expected to come up in the future, e.g. UMTS phones.

### Source Interfaces

Further, support for WAP or sources that do not offer an HTML based interface are possible (i.e. banks using an applet solution only). The HBCI standard can be supported as well.

### Reference List:

- 1: client device
- 2: user sphere
- 3: sources
- 4: central server device (Stackbox)
- 5: aggregator
- 6: user input device
- 7: local storage device

- 10: client device
- 11: user sphere
- 12: aggregator
- 13: scraper
- 14: sources

## Claims

1. Method for providing web content aggregation by communicating information between a user and a source storing specific user data on a source server,
wherein a control software for controlling the authorization and data retrieval/sending process is executed on a client device,
wherein the client device connects to a central server device to retrieve driver files for the specific source server and business transaction,
wherein the user enters confidential access data requested from the control software locally executed on the client device,
wherein the client device connects to the source server to perform the authorization process,
wherein after authorization is successfully completed the client device automatically extracts the required data out of the source information,
wherein the data is enhanced and presented to the user, and
wherein the information is provided via a communications network like the internet.

2. Method according to claim 1, wherein the client device forwards the data extracted out of the source information to an aggregator, wherein the aggregator enhances the data, and wherein the enhanced data is transmitted to the user's client device.

3. Method for providing web payment by communicating information between a user, an aggregator and a financial services provider (source) storing specific user data on a source server,
wherein a control software for controlling the authorization and data retrieval/sending process is executed on the client device,
wherein the client device connects to the central server device to retrieve driver files for the specific source server and business transaction,
wherein the user enters confidential access data requested from the control software locally executed on the client device,
wherein the client device connects to the source server to perform the authorization process,
wherein after authorization is successfully completed the client device automatically initiates the payment process by a data exchange with the source, extracts the resulting data out of the source information and forwards this data to the aggregator,
wherein the aggregator enhances the data, and
wherein the information is provided via a communications network like the internet.

4. Method according to any of the preceding claims, wherein the control software is retrieved from an aggregator server device.

5. Method according to any of the preceding claims, wherein the driver files correlate the input fields of the source software to data retrieved from the aggregator.

6. Method according to any of the preceding claims, wherein the driver files correlate the output data of the source to standard fields of the control software.

7. Method according to any of the preceding claims, wherein the driver files lead through the specific source software.

8. Method according to any of the preceding claims, wherein the data is provided to the source and extracted out of the source information in a HTML or XML format.

9. Method according to any of claims 2 to 8, wherein the data extracted from the source information is sent to the aggregator in the form of machine readable raw data.

10. Method according to any of the preceding claims, wherein the confidential access data is stored locally on the user's client device.

11. Method according to claim 10, wherein the confidential access data is stored in an encrypted format.

12. Method according to any of the preceding claims, wherein the control software serially accesses a plurality of sources according to the configuration retrieved from the aggregator server device.

13. Method according to any of the preceding claims, wherein the control software parallely accesses a plurality of sources according to the configuration retrieved from the aggregator server device.

14. Method according to any of the preceding claims, wherein the control software is an applet.

15. Computer program product comprising program code means for performing the method according to any of the preceding claims, if the program is used on a computer or computer network.

16. Computer program product comprising program code means according to claim 15, stored on a computer readable data carrier.

17. System for providing web content aggregation and/ or web payment by communicating information between a user, an aggregator and a source, comprising:
at least one source server storing specific user data,
at least one device storing software for controlling authorization and data retrieval/ sending processes,
a central server storing driver files for specific source servers and/ or business transactions,
a client device connected to the aggregator server device to retrieve, store and execute the control software for controlling the authorization and data retrieval/sending process in a local memory and connected to said central server to retrieve the driver files for the specific source servers and/ or business transactions,
wherein the client device is connected to the source server to automatically exchange the required data with the source server and forward this data to the aggregator,
wherein said aggregator server device is connected to said client device for transmitting enhanced user data to the user's client device,
wherein the client device, the central server and the aggregator computer are linked via a communications network like the internet.

18. System according to claim 17, wherein said source server is provided with a HTML or XML based interface.

19. System according to claim 17 or 18, wherein the client device communicates with the aggregator server device, the central server device and/or the source server via a HTTP and/or HTTPS connection.
